# EUROPEAN PATENT APPLICATION

(11) **EP 2 503 675 A1**
(43) Date of publication of application: **26.09.2012**
(21) Application number: 11841958.9
(22) Date of filing: 29.04.2011
(51) Int. Cl.: H02K 9/10, H02K 1/20, H02K 1/32

(54) **VENTILATION SYSTEM FOR AN ELECTRIC MACHINE**

(30) Priority: 16.11.2010 RU 2010146596
(71) Applicant: Zakrytoe Aktsionernoe Obsh Hestvo "Neft'stal'konstruktsiya", Moscow 115114 (RU)
(72) Inventor: SHALAEV, Vladimir Grigor'evich, St.Petersburg 197022 (RU)
(74) Representative: Klemm, Rolf
(86) International application number: PCT/RU2011/000286
(87) International publication number: WO 2012/067537

(57) **Abstract**

The claimed invention relates to the electric machine industry and is designed for use in a ventilation system of an electrical machine of a large size, such as a high-powered turbine generator with air-cooled stator and rotor. The electrical machine is vented in the following way. The air, under forcing action of the fans 6, enters into the inlet collector 8, then into the radial ducts 7, 18 of the ventilation zones 15. The air flows into the gap 10 and the ventilation ducts 12 of the rotor from the radial ducts 7, then via the gap 10 and the radial ducts 7 of the ventilation zones 16 it is discharged into a low-pressure area through the outlet collectors 11. The air is also discharged from the radial ducts 18 into a low-pressure area through the outlet collectors. Tangential movement of the air in the ducts 7 of the ventilation zones 15,16 is carried out through the bypass openings 25. Tangential movement of the air in the ducts 18 is carried out through the bypass openings 20. Installation of the stator ventilation ducts closed from the gap side in zones 12, 13 permits to reduce the temperature of the stator active parts in the outlet zones (up to ~25°C) and the temperature of the rotor winding (up to ~10°C). Moreover temperature pattern of the active parts along the length of the machine is more uniform. The said advantages of the ventilation system permits to increase unit capacity of the electrical machine. 3 subclaims, 4 drawings.

## Description

### Field of Invention

The claimed invention relates to the electric machine industry and is designed for use in a ventilation system of an electrical machine of a large size, more particularly, a high-powered turbine generator with air-cooled stator and rotor.

### Prior Art

There is a ventilation system of an electrical machine [1], where a stator core consists of laminated packs separated by radial ventilation ducts, which are formed by spacers. From the coolant flow inlet side the radial ducts are connected with a high-pressure chamber located between a body and a back of the stator core. From the side of the stator core bore all ducts are closed with tangential spacers. The coolant flow is discharged into a low-pressure chamber located in a stator end winding zone through collectors (air ducts) axially fixed on the stator core back. The collectors are connected with partitions each of which closes the coolant flow pass into the collectors in the even ducts and into the high-pressure chamber in the odd ducts.

In the ventilation system [2] the radial ventilation ducts of the stator core are connected with the high-pressure chamber located between the body and the back of the stator core in the inlet zone and with the low-pressure chamber in the discharge zone. The ventilation ducts are arranged into alternate blocks: the ducts of the first group are closed with the tangential spacers from the gap side and the ducts of the second group are opened from the gap side. In the gap located in the inner surface of the stator bore there is a ring unit bracing the rotor in points, where the coolant flow is discharged from the ducts of the second group. The coolant flow going from the high-pressure chamber to the ducts of the first group moves to the adjacent ducts of the same group through axial openings and then to the low-pressure chamber through the collectors. In the second group of ducts the coolant flow is discharged along the gap into the nearest low-pressure chamber.

The prior arts permit to cool the stator effectively. But their common drawback is a lack of forcing action of fans necessary for circulation of the coolant flow in the rotor. It limits use of such ventilation system in high-powered machines with long rotor, where, for example, subslots cross section (where the coolant flow enters though rotor body ends) is insufficient for effective rotor cooling.

A prototype of the claimed invention is a ventilation system of the electrical machine [3], where the stator core is made with the ventilation ducts opened in the gap and the rotor is made with the ventilation ducts which inlet and outlet are connected with the gap. The collectors of inlet of the coolant flow into the ventilation ducts of the stator core and the collectors of outlet from the ventilation ducts are located between the body and the back of the stator core. The zones of inlet of the coolant flow from the stator core ducts into the gap and the ventilation ducts of the rotor alternate in axial direction with the zones of outlet of the flow from the ducts of the rotor and the gap into the stator core ducts. There are separating ring units on the zone borders in the gap. The inlet and outlet collectors are connected with the zones of high and low pressure respectively.

This ventilation system uses forcing action of the fans which provides circulation of the coolant flow in the rotor ventilation ducts, which is its advantage. The system drawback is a great difference between heating of active parts of the stator in the zones of outlet of the coolant flow from the gap and heating in the zones of inlet of the flow into the gap. The difference can reach 50°C and above in high-powered machines. Active parts of the rotor are also characterized by increased heat because the coolant flow, heated in the inlet zones of the stator, enters into its ventilation system.

The problem of the claimed invention consists in increase of unit capacity of the electrical machine by reduction of temperatures of the stator and rotor active parts.

### Disclosure of the Invention

The problem is solved due to the fact that the ventilation system of the said electrical machine comprising the rotor with ventilation ducts inlet and outlet of which are connected with the gap; the stator core with the radial ventilation ducts opened from the gap side; the collectors of inlet of the coolant flow into the core ducts and outlet of the flow from the core ducts which are installed in the space between the body and the back of the core; the zones of inlet of the coolant flow from the core ducts into the gap and the ventilation ducts of the rotor alternating in axial direction with the zones of outlet of the coolant flow from the ventilation ducts of the rotor and the gap into the stator core ducts; the separating ring units installed in the gap on the zone borders; at least in one of the said zones in the stator core there are additional radial ventilation ducts closed from the gap side, each of which is connected with inlet and outlet collectors, moreover, the tangential spacers closing connection with the outlet collectors are installed in the radial ventilation ducts, opened from the gap side and the tangential spacers closing connection with the inlet collectors are installed in the outlet zone. The following designs of the ventilation system made with additional radial ventilation ducts closed from the gap side are available:
- in the zones of outlet of the coolant flow;
- in the zones of inlet of the coolant flow;
- in the zones of outlet and inlet of the coolant flow.

The background art has not demonstrated availability of additional stator core ventilation ducts, closed from the gap side, in respect to the ventilation system where forcing action of the fans is used in the rotor ventilation ducts for circulation of the coolant flow and the stator core ventilation ducts, opened from the gap side are used for feeding of the coolant flow to the rotor and discharge from it. Moreover, the tangential spacers have not been found in the radial ducts, opened from the gap.

### Brief Description of the Drawings

The claimed invention is illustrated by drawings, where
Figure 1 is a general view of the electrical machine in longitudinal section (up to the axis of symmetry);
Figure 2 is a cross section of the stator along the radial ventilation duct closed from the gap side;
Figure 3 and Figure 4 is a cross section of the stator along the radial ventilation duct opened from the gap side in the zones of inlet and outlet of the coolant flow respectively.

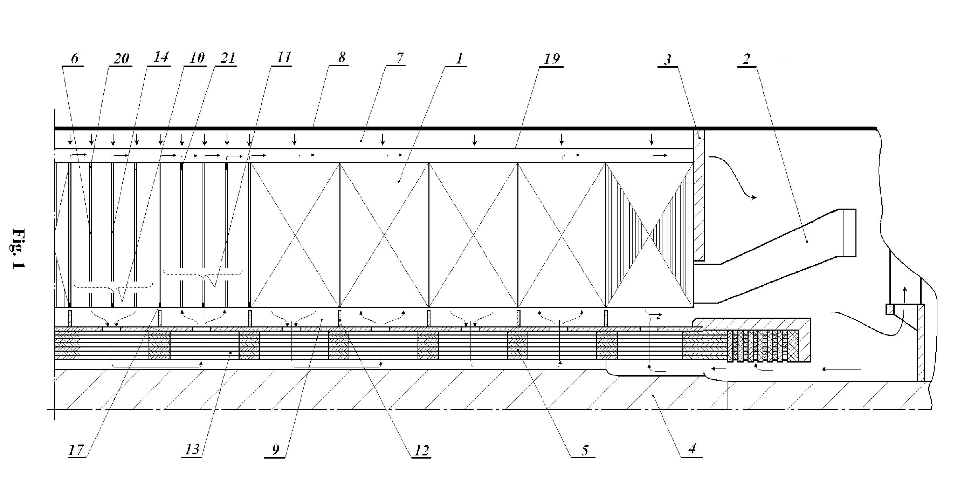

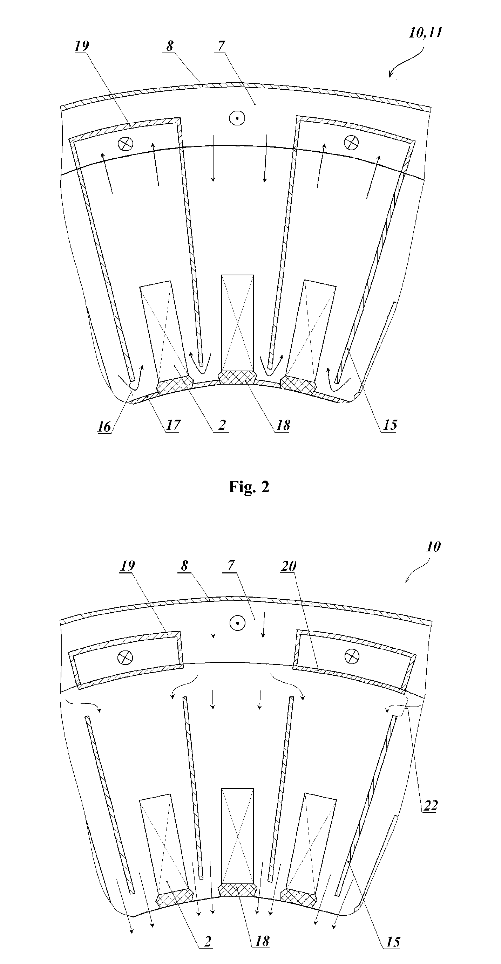

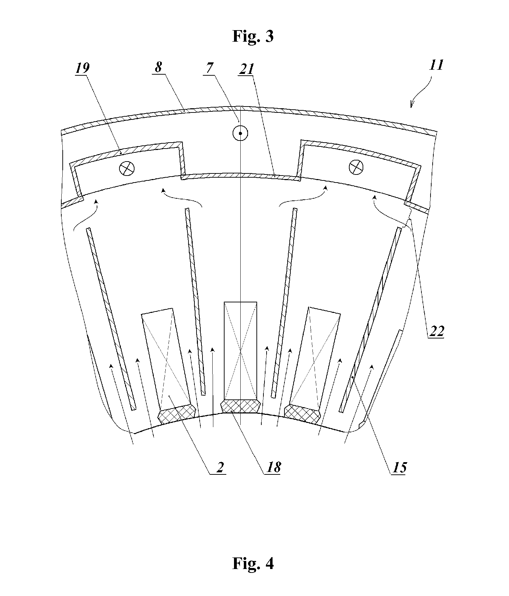

The ventilation system of the electrical machine, for example, an air-cooled turbine generator, comprises a stator with a core 1, a winding 2, an end plate 3 and a rotor 4 with a winding 5 (see. Fig. 1). Fans 6 are installed on a shaft of the rotor 4. The core 1 comprises radial ventilation ducts 7 opened into a space 8 between a body 9 and the core 1 as well as from a gap 10 side. The space 8 serves as a collector of inlet of a coolant flow into stator core ducts. It is connected with a high pressure area. Collectors 11 of outlet of the coolant air, connected with a low pressure area, are located in the space 8 on the surface of the core 1. The rotor 4 is provided with ventilation ducts 12 each of which is formed by two radial slots 13 in the winding 5 of the rotor 4 and subslots 14 in the body of the rotor 4. Alternating ventilation zones are formed in the ventilation system in the axial direction: 15 - zones of inlet of the coolant air into the ducts 7, the gap 10, the ducts 12; 16 - zones of outlet of the coolant air from the ducts 12, the gap 10, the ducts 7. Ring partitions 17 fixed, for example, on the rotor 4, are installed in the gap 10 on the border of the ventilation zones 15, 16. Each ventilation duct 12 of the rotor is opened in the zone 15 of inlet of the coolant air and in the zone 16 of outlet of the coolant air. In the ventilation zones 15 and/or 16 in the stator core 1 there are additional radial ventilation ducts 18 closed from the gap 10 side, which alternate with the ducts 7. Optimal design which provides uniform cooling of all active parts of the generator is an installation of the closed ducts 18 in each zone 15 and 16. The ventilation ducts 7 and 18 are formed by spacers 19 (see Fig. 2). The spacers 19 are installed in the ducts 18 in such a way that they form bypass openings 20. The ducts 18 are closed from the gap side 10 with tangential spacers 21 installed in the tooth area of the core 1 between coil braces 22, which fix the winding 2. In the zones 15, 16 each duct 18 of the stator core 1 is opened in the collectors 8, 11. In the zones 15 the ducts 7 are closed for connection with the outlet collectors 11 with tangential spacers 23 (see Fig. 3) and in the zones 16 the ducts 7 are closed for connection with the inlet collector 8 with tangential spacers 24 (see Fig. 4). In the zones 15, 16 the spacers 19 are installed in such a way that they form bypass openings 25.

The electrical machine is vented in the following way. The air, under forcing action of the fans 6, enters into the inlet collector 8 (air circulation is arrowed in the drawings), then into the radial ducts 7, 18 of the ventilation zones 15. The air flows into the gap 10 and the ventilation ducts 12 of the rotor from the radial ducts 7, then via the gap 10 and the radial ducts 7 of the ventilation zones 16 it is discharged into a low-pressure area through the outlet collectors 11. The air is also discharged from the radial ducts 18 into a low-pressure area through the outlet collectors. Tangential movement of the air in the ducts 7 of the ventilation zones 15,16 is carried out through the bypass openings 25. Tangential movement of the air in the ducts 18 is carried out through the bypass openings 20.

Installation of the stator ventilation ducts closed from the gap side, in zones 12, 13 permits to reduce the temperature of the stator active parts in the outlet zones (up to ~25°C) and the temperature of the rotor winding (up to ~10°C). Moreover temperature pattern of the active parts along the length of the machine is more uniform. The said advantages of the ventilation system permits to increase unit capacity of the electrical machine.

Considered information sources:
1. Patent RU 2350006, applicant "Power Machines", H02K1/20, H02K9/04, priority dated 04.06.2007, published on 20.03.2009.
2. Patent RU 2396667, applicant "Power Machines", H02K1/20, H02K9/12, priority dated 16.07.2009, published on 10.08.2010.
3. Patent US3265912, applicant Westinghouse, H02K3/246 H02K9/00, priority dated 15.06.64, published on 09.08.66.

## Claims

1. The ventilation system of the electrical machine comprising the rotor with ventilation ducts inlet and outlet of which are connected with the gap; the stator core with the radial ventilation ducts opened from the gap side; the collectors of inlet of the coolant flow into the core ducts and outlet of the flow from the core ducts which are installed in the space between the body and the back of the stator core; the zones of inlet of the coolant flow from the core ducts into the gap and the ventilation ducts of the rotor alternating in axial direction with the zones of outlet of the coolant flow from the ventilation ducts of the rotor and the gap into the stator core ducts; the separating units installed in the gap on the zone borders; at least in one of the said zones in the stator core there are additional radial ventilation ducts, closed from the gap side, each of which is connected with inlet and outlet collectors, moreover, the tangential spacers closing connection with the outlet collectors are installed in the inlet zone in the radial ventilation ducts of the stator core opened from the gap side and the tangential spacers closing connection with the inlet collectors are installed in the outlet zone.

2. The ventilation system of the electrical machine as defined in claim 1, **characterized in that** additional ventilation ducts are made in the stator core, at least in one zone of outlet of the coolant flow.

3. The ventilation system of the electrical machine as defined in claim 1, **characterized in that** additional ventilation ducts are made in the stator core, at least in one zone of inlet of the coolant flow.

4. The ventilation system of the electrical machine as defined in claim 1, **characterized in that** additional ventilation ducts are made in the stator core, at least in one zone of inlet and in one zone of outlet of the coolant flow.
